# EUROPÄISCHE PATENTSCHRIFT

(11) **EP 3 626 039 B1**
(45) Veröffentlichungstag und Bekanntmachung des Hinweises auf die Patenterteilung: **11.10.2023**
(21) Anmeldenummer: 19401033.6
(22) Anmeldetag: 04.09.2019
(51) Int. Cl.: A01B 71/04, A01B 29/04, F16C 23/08, F16C 33/78, F16C 33/76, F16C 27/06

(54) **LAGERANORDNUNG UND LANDWIRTSCHAFTLICHE MASCHINE MIT DIESER LAGERANORDNUNG**
BEARING ARRANGEMENT AND AGRICULTURAL MACHINE WITH THIS BEARING ARRANGEMENT
AGENCEMENT DE PALIER ET MACHINE AGRICOLE DOTÉE DE CET AGENCEMENT DE PALIER

(30) Priorität: 19.09.2018 DE 102018122932
(43) Veröffentlichungstag der Anmeldung: 25.03.2020
(73) Patentinhaber: Amazonen-Werke H. Dreyer SE & Co. KG, 49205 Hasbergen (DE)
(72) Erfinder: Scherf, Silvio, 39444 Hecklingen OT Cochstedt (DE); Asmuß, Stefan, 04275 Leipzig (DE)

(56) Entgegenhaltungen:
- CN-U- 206 830 673
- DE-A1-102013 102 871
- DE-U1- 20 010 216
- US-A- 4 249 782
- US-A1- 2015 189 824

## Beschreibung

Die Erfindung betrifft eine Lageranordnung gemäß dem Oberbegriff des Patentanspruches 1 und eine landwirtschaftliche Maschine gemäß dem Oberbegriff des Patentanspruches 5.

Eine derartige Lageranordnung und landwirtschaftliche Maschine sind in der US 4,249,782 A offenbart.

Eine weitere derartige landwirtschaftliche Maschine und Lageranordnung ist in DE 10 2018 100 747.7 beschrieben. Diese landwirtschaftliche Maschine umfasst ein als Bodenwalze ausgeführtes Drehelement. Weiter ist der Bodenwalze ein Traggerüst zugeordnet. Die Bodenwalze ist auf beiden Endseiten jeweils mittels eines Lagerzapfens und einer Lagereinheit drehbar mit dem Traggerüst verbunden. Zur Bearbeitung eines Feldes kann die Bodenwalze so auf dem Erdboden abrollen und sich um die horizontale und quer zur Fahrtrichtung verlaufende Drehachse drehen.

Bei dieser landwirtschaftlichen Maschine ist die Lagereinheit bestehend aus einer Lageranordnung mit einem einreihigen Kugellager ausgeführt, wobei sowohl der Lagerinnenring als auch der Lageraußenring eine spezielle Geometrie aufweisen und so im Lagergehäuse bzw. gegeneinander verkippbar sind. Die Lagereinheit kann über das Lagergehäuse entweder an dem als Bodenwalze ausgeführten Drehelement oder an dem Traggerüst angeordnet sein. Der jeweilige Lagerzapfen, welcher in dem als Kugellager ausgeführten Wälzlager drehbar gelagert ist, ist folglich entweder an dem Traggerüst oder an der Bodenwalze angeordnet. Mit anderen Worten: es ist unerheblich ob die Lagereinheit oder der Lagerzapfen an der Bodenwalze angeordnet ist und sich mit dieser bei Bearbeitung des Feldes mitdreht, während die jeweils andere der beiden Komponenten am Traggerüst angeordnet ist.

Die Lagereinheit ist anhand der speziell geformten Lagerringe dazu eingerichtet, einen Winkelversatz zwischen den Längsachsen des Lagergehäuses und des Lagerzapfens auszugleichen. Der Winkelversatz kann beispielsweise entstehen durch, eine nicht zumindest annährend exakte Anordnung des Lagerzapfens mit seiner Längsachse in Verlängerung der Drehachse der Bodenwalze, eine nicht zumindest annährend exakt orthogonale Anordnung der Fläche an der Bodenwalze, die der Befestigung der Lagereinheit oder des Lagerzapfens dient, zur Drehachse der Bodenwalze und/oder eine nicht zumindest annährend exakt orthogonale Anordnung der Längsachse des Traggerüsts zur Drehachse der Bodenwalze. Der Ausgleich des Winkelversatzes wirkt sich positiv auf die Lebensdauer der Lagereinheit aus, da der Lagerzapfen anderenfalls bei Drehung der Bodenwalze eine die Lagereinheit schädigende Taumelbewegung ausführen würde.

Nachteilig bei der vorstehend beschriebenen Lageranordnung der landwirtschaftlichen Maschine ist, dass die Lagereinheit und insbesondere das in dem Lagergehäuse angeordnete Wälzlager nahezu ungeschützt vor äußeren Einflüssen sind. Bei der Bodenbearbeitung durch die Bodenwalze wird regelmäßig Schmutz, wie Staub und Pflanzenreste, aufgewirbelt, welcher in das Lagergehäuse eindringen kann. Im Lagergehäuse können sich die Verschmutzungen absetzen und so die drehbare Lagerung mittels der Wälzkörper und die Ausgleichsmöglichkeit für schadhaften Winkelversatz verhindern. Das Eindringen von Fremdkörpern in die Lageranordnung sollte daher verhindert werden.

Weiter nachteilig ist, dass einerseits Spritzwasser in das Lagergehäuse eintreten kann, wodurch sich die Eigenschaften des im Lagergehäuse befindlichen Schmiermittels verschlechtern. Andererseits kann Schmiermittel, wie beispielsweise Öl, aus dem Lagergehäuse austreten, wodurch sich anhand mangelnder Schmierung die Lagerlebensdauer beträchtlich verringert. Außerdem kann austretendes Schmiermittel die Umwelt belasten. Das Eintreten und/oder Auslaufen von Flüssigkeiten in bzw. aus dem Lagergehäuse sollte daher unterbunden werden.

Die DE 10 2013 102 871 A1 offenbart ebenfalls eine Lageranordnung für eine Bodenwalze, wobei dem Lagergehäuse ein Dichtring zugeordnet ist.

Aus der US 2015/0189824 A1 ist eine Lageranordnung bekannt, die auf der Außenseite eine Lagerkappe aufweist.

Eine Gleitringdichtung für Pumpen oder Walzen landwirtschaftlicher Geräte ist aus der DE 200 10 216 U1 bekannt.

In der CN 206 830 673 U ist eine Gehäusedichtung für die Antriebswelle eines angetriebenen Bodenbearbeitungsgerätes offenbart.

Die Aufgabe der vorliegenden Erfindung besteht darin, eine Lageranordnung zu schaffen, welche einen verbesserten Schutz vor äußeren Einflüssen und Umweltbelastungen aufweist.

Diese Aufgabe wird erfindungsgemäß durch die Merkmale der unabhängigen Patentansprüche gelöst. Vorteilhaft ist, dass die Lagereinheit eine Dichtungsanordnung umfasst, wobei die Dichtungsanordnung dazu eingerichtet ist, einen umlaufenden Spalt zwischen Lagerzapfen und Lagergehäuse, vorzugsweise zumindest annährend flüssigkeitsdicht und/oder staubdicht abzudichten.

Die Erfindung macht sich die Erkenntnis zunutze, dass der Bereich in dem Relativbewegungen zwischen Lagerzapfen und Lagergehäuse auftreten besonders anfällig für vorstehend beschriebene Verschmutzungsproblematiken ist und die Abdichtung desselbigen dem Schutz der Lageranordnung daher besonders zuträglich ist. In vorteilhafter Weise hindert die erfindungsgemäße Dichtungsanordnung nicht nur Spritzwasser vor dem Eintritt ins Lagergehäuse sondern bezweckt auch, dass als Schmiermittel eingesetztes Öl vor dem Austritt aus dem Lagergehäuse gehindert wird.

Infolge dieser Maßnahme ist die ohnehin dank des Ausgleiches des Winkelversatzes gesteigerte Lebensdauer der Lagereinheit weiter verlängert. In zweckmäßiger Weise ist die Lagereinheit besonders weitergebildet für den Einsatz an dem als Bodenwalze ausgeführten Drehelement.

In einer vorteilhaften Weiterbildung der Erfindung ist vorgesehen, dass die Lagereinheit in seinem Lagergehäuse ein Wälzlager zur drehbaren Verbindung zwischen Bodenwalze und Traggerüst über den Lagerzapfen umfasst, wobei das Wälzlager als Pendellager mit vorzugsweise tonnenförmigen oder kugelförmigen Wälzkörpern ausgeführt ist und die Lagereinheit mittels des Pendellagers dazu eingerichtet ist, den Winkelversatz auszugleichen. Die Wälzkörper sind vorzugsweise zwischen einem Lageraußenring und einem Lagerinnenring angeordnet. Der Lageraußenring weist vorzugsweise eine konkave Laufbahn auf; der Lagerinnenring weist vorzugsweise zwei zur Lagerachse geneigte konkave Laufbahnen auf. Um den Winkelversatz auszugleichen, lässt der Lagerinnenring sich über die zwischen den Laufbahnen abrollenden Wälzkörper im Lageraußenring verkippen. Pendellager weisen außerdem in Relation zum benötigten Bauraum besonders hohe Tragzahlen auf und sind daher für eine robuste und platzsparende Bauweise geeignet.

Erfindungsgemäß das Lagergehäuse mittels der den umlaufenden Spalt zwischen Lagerzapfen und Lagergehäuse abdichtenden, mit dem Lagerzapfen zusammenwirkenden Dichtungsanordnung einerseits und einer lösbaren Lagerkappe mit einer als O-Ring ausgeführten umlaufenden Dichtlippe andererseits zumindest annährend öldicht und/oder staubdicht ausgeführt. Besonders vorteilhaft ist hierbei, dass der Schutz der Lageranordnung vor äußeren Einflüssen durch die Lagerkappe weiter gesteigert ist. Außerdem wird das Austreten von Schmiermitteln durch diese Weiterbildung auf beiden Seiten des Lagergehäuses verhindert, während eine einfache und gut zugängliche Montage der Lageranordnung durch die lösbare Lagerklappe weiterhin gewährleistet ist.

Die erfindungsgemäße Lagereinheit ist ferner vorteilhaft dadurch weitergebildet, dass das Lagergehäuse mit einer Ölbadschmierung, vorzugsweise als Lebensdauerschmierung, versehen ist. Das Lagergehäuse ist vorzugsweise bis zur Mitte des untersten Wälzkörpers im Stillstand des Lagers mit Öl gefüllt, so dass dieses bei Bewegung des Lagers von den umlaufenden Komponenten verteilt wird. Die Lagereinheit ist infolge dieser Maßnahme besonders wartungsarm und auf Lebensdauer geschmiert.

Erfindungsgemäß umfasst die Dichtungsanordnung zumindest einen Gleitring, zumindest einen Laufring und zumindest einen ersten und einen zweiten Stützring. Diese vorteilhafte Ausführungsform ist in besonderer Weise für den Einsatz an rotierenden Komponenten eingerichtet und somit besonders geeignet zur Abdichtung des Überganges zwischen Lagergehäuse und Lagerzapfen.

Die erfindungsgemäße Dichtungsanordnung ist ferner vorteilhaft dadurch weitergebildet, dass der Gleitring den Lagerzapfen umgreifend, nicht drehbar an dem Lagergehäuse angeordnet ist, wobei der Laufring den Lagerzapfen zumindest annährend öldicht umschließend, nicht drehbar an dem Lagerzapfen angeordnet ist, und dass der Gleitring mittels des ersten Stützringes mit dem Laufring mittels des zweiten Stützringes an zueinander weisenden Flächen verspannt ist. Der Gleitring und der Laufring sind mit Hilfe des jeweiligen Stützringes an dem Lagergehäuse bzw. dem Lagerzapfen abdichtend angeordnet. Das heißt, zwischen Gleitring bzw. Laufring und dem jeweiligen Bauteil ist der Eintritt von Verschmutzungen und der Austritt von Schmiermittel verhindert. Die Abdichtung des Überganges zwischen den gegeneinander rotierend bewegten Bauteilen, nämlich Lagergehäuse und Lagerzapfen, wird durch das Abgleiten der zueinander weisenden Flächen von Gleitring und Laufring bewerkstelligt. Da diese zusätzlich über den ersten und zweiten Stützring gegeneinander gedrückt werden, ist der Schutz in besonderer Weise gesteigert.

Erfindungsgemäß sind der Gleitring und der Laufring aus einem, vorzugsweise identischen und hochlegierten, Metallwerkstoff geformt, wobei der Gleitring und der Laufring, vorzugsweise an den zueinander weisenden Flächen, jeweils zumindest eine geläppte, und vorzugsweise polierte, Lauffläche aufweisen. Da das Dichtprinzip der Dichtungsanordnung darauf basiert, dass der Gleitring und der Laufring gegeneinander abgleiten, sind infolge dieser Maßnahme besonders günstige Reibungsverhältnisse geschaffen. Durch den Einsatz hochfester Werkstoffe ist die Lebensdauer der Dichtungsanordnung vortrefflich gesteigert. Durch die Läppung der Laufflächen ist die Oberflächenrauheit besonders gering, so dass wenn diese übereinander reiben die Wärmeentwicklung reduziert ist und die Reibungsverluste insgesamt verringert sind. Diese Weiterbildung zeichnet sich folglich durch besonders zweckmäßige Laufeigenschaften aus.

Um zu verhindern, dass das Dichtprinzip der Dichtungsanordnung, falls ein Winkelversatz zwischen den Längsachsen des Lagergehäuses und des Lagerzapfens auftritt, unterbrochen wird, ist in einer vorteilhaften Weiterbildung vorgesehen, dass der zumindest eine erste Stützring und der zumindest eine zweite Stützring aus einem elastischen Werkstoff, vorzugsweise aus einem Elastomer, geformt sind, so dass die Dichtungsanordnung mittels des ersten und zweiten Stützringes dazu eingerichtet ist, einem Winkelversatz zwischen den Längsachsen des Lagergehäuses und des Lagerzapfens zu folgen. Für den Fall, dass ein Winkelversatz auftritt, wird diese Abweichung infolge dieser Weiterbildung in eine zyklisch auftretende elastische Verformung der Stützringe umgesetzt. Sämtliche Dichtflächen entfalten nach wie vor ihre Wirkung, so dass der Schutz der Lageranordnung auch unter diesen Umständen gewährleistet ist.

In einer weiteren vorteilhaften Weiterbildung der Erfindung ist vorgesehen, dass der Lagerzapfen und/oder das Lagergehäuse mittels lösbarer Befestigungsmittel an dem Traggerüst oder an der Bodenwalze angeordnet ist. Die Verwendung lösbarer Befestigungsmittel hat zum Vorteil, dass Nacharbeiten an einzelnen Bauteilen in besonders einfacher Weise möglich sind. Auch lassen sich die Komponenten so einfacher zueinander montieren. Alternativ können der Lagerzapfen und/oder das Lagergehäuse nicht lösbar an dem Traggerüst oder an der Bodenwalze angeordnet sein.

In einer besonders vorteilhaften Weiterbildung der Erfindung sind die lösbaren Befestigungsmittel als Schrauben und/oder einschraubbare Mittenzentrierung ausgeführt. Eine besonders verzugsarme und einfache Montage ist somit gewährleistet. Zudem treten keine Gefügeveränderungen an den zu verbindenden Bauteilen auf, was der Langzeitfestigkeit zuträglich ist.

Weitere Einzelheiten der Erfindung sind der Beispielsbeschreibung und den Zeichnungen zu entnehmen. Die Zeichnungen zeigen
- Fig.1: ein Ausführungsbeispiel der erfindungsgemäßen Lageranordnung in perspektivischer Ansicht,
- Fig.2: die Lageranordnung in Schnittansicht,
- Fig.3: ein als Bodenwalze ausgeführtes Drehelement mit zugeordnetem Traggerüst und der Lageranordnung in geschnittener Teilansicht,
- Fig.4: die Lageranordnung, gemäß Fig.3, in Detailansicht und Schnittansicht,
- Fig.5: die Lageranordnung, wobei ein Winkelversatz **α auftritt**, in **Schnittansicht**, und
- Fig.6: ein weiteres Ausführungsbeispiel einer erfindungsgemäßen Lageranordnung angeordnet zwischen Bodenwalze und Traggerüst in Schnittansicht.

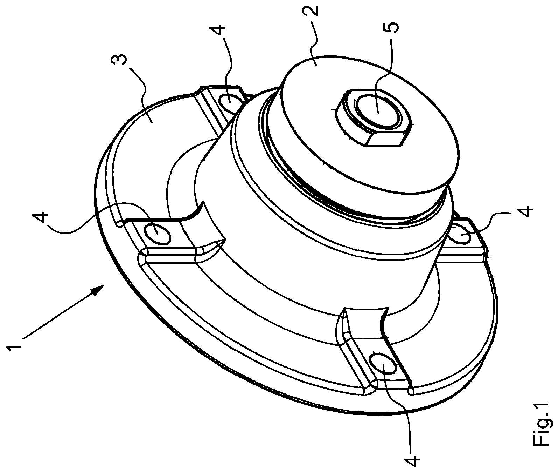

Ein erstes Ausführungsbeispiel einer erfindungsgemäßen Lageranordnung ist in Fig.1 gezeigt. Die Lageranordnung weist eine Lagereinheit 1 und einen in der Lagereinheit 1 drehbaren Lagerzapfen 2 auf. Die Lagereinheit 1 umfasst ein rundes Lagergehäuse 3. Das Lagergehäuse 3 ist mit insgesamt vier Bohrungen 4 versehen, die genutzt werden können, um die Lagereinheit 1 entweder an einem als Bodenwalze 7 ausgeführten, hier nicht gezeigten Drehelement oder an einem der Bodenwalze 7 zugeordneten, ebenfalls nicht gezeigten Traggerüst 8 zu befestigen. Der Lagerzapfen 2 weist ein Innengewinde 5 auf, welches genutzt werden kann, um den Lagerzapfen 2 an dem jeweils anderen Bauteil, also entweder Traggerüst 8 oder Bodenwalze 7, zu befestigen. Über das Traggerüst 8 lässt sich die Bodenwalze 7 an einer landwirtschaftlichen Maschine anordnen und zur Bodenbearbeitung einsetzen.

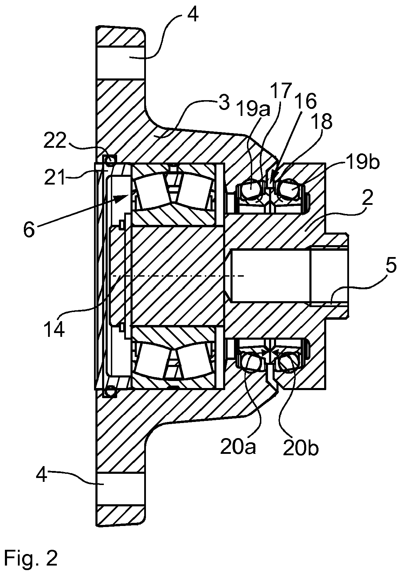

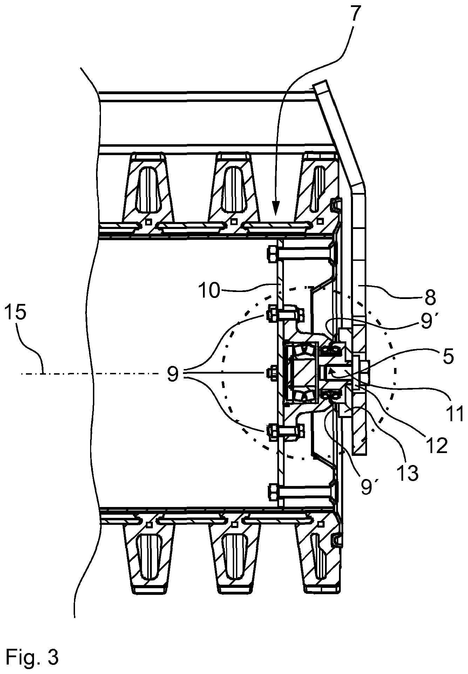

Die Lageranordnung ist in Fig.2 in Schnittansicht zu sehen. In dem Lagergehäuse 3 der Lagereinheit 1 ist ein als zweireihiges Pendelrollenlager 6 ausgeführtes Wälzlager angeordnet. Über den in dem Pendelrollenlager 6 der Lagereinheit 1 gelagerten Lagerzapfen 2 lassen sich die Bodenwalze 7 und das Traggerüst 8 drehbar verbinden, wie in Fig.3 gezeigt ist. Hierzu ist die Lagereinheit 1 über als Schrauben 9 ausgeführte lösbare Befestigungsmittel mittels der Bohrungen 4 im Lagergehäuse 3 an einer im Innern der Bodenwalze 7 verschweißten Ronde 10 befestigt. Aus Gründen der Übersichtlichkeit ist hier nur eines der beiden seitlichen Enden der Bodenwalze 7 mit der Verbindung zum Traggerüst 8 gezeigt. Eine gleich geartete Verbindung kann für das hier nicht dargestellte gegenüberliegende Ende gewählt werden.

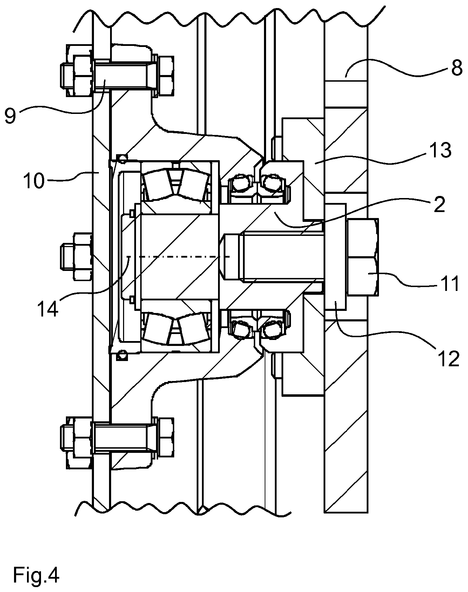

Gegenüber dem Lagergehäuse 3 ist der Lagerzapfen 2 mittels einer Mittenzentrierung 11, welche ebenfalls lösbar ist, an dem Traggerüst 8 befestigt. Hierzu ist die Mittenzentrierung 11 unter Zuhilfenahme einer Unterlegscheibe 12 in das Innengewinde 5 eingeschraubt, so dass der Lagerzapfen 2 mit einem Flansch 13 verspannt ist, wie Fig.4 zeigt. Der Flansch 13 ist wiederum über einen weiteren Satz Schrauben 9' an dem Traggerüst 8 angeordnet. Zur Bearbeitung eines Feldes kann die Bodenwalze 7 so auf dem Erdboden abrollen und sich um eine horizontale und quer zur Fahrtrichtung verlaufende Drehachse 15 drehen.

Die Lagereinheit 1 weist außerdem eine Dichtungsanordnung 16 auf, um den umlaufenden Spalt zwischen Lagerzapfen 2 und Lagergehäuse 3 flüssigkeitsdicht und staubdicht abzudichten. Das Pendelrollenlager 6 ist so vor bei der Bodenbearbeitung aufgewirbeltem Schmutz geschützt. Wie Fig.2 zeigt, umfasst die Dichtungsanordnung 16 einen Gleitring 17, einen Laufring 18 jeweils aus hochlegiertem Metall und einen ersten und einen zweiten Stützring 19a, 19b jeweils aus Elastomer. Der Gleitring 17 ist nicht drehbar am Lagergehäuse 3 festgelegt und umgreift den Lagerzapfen 2. Der Laufring 18 umschließt den Lagerzapfen 2 zumindest annährend flüssigkeitsdicht und ist nicht drehbar an dem selbigen angeordnet. Der Gleitring 17 ist über die Abstützung mittels des ersten Stützringes 19a am Lagergehäuse 3 mit dem Laufring 18 über dessen Abstützung mittels des zweiten Stützringes 19b am Lagerzapfen 2 an zueinander weisenden Laufflächen 20a, 20b verspannt. Bei Drehung des Lagerzapfens 2 gegenüber dem Lagergehäuse 3 gleiten die geläppten Laufflächen 20a, 20b aufeinander ab und dichten gemeinsam mit dem ersten und zweiten Stützring 19a, 19b den umlaufenden Spalt zwischen Lagerzapfen 2 und Lagergehäuse 3 ab.

Die Rückseite des Lagergehäuses 3 ist durch eine lösbare, mit einer umlaufenden Dichtlippe 22 versehenen Lagerkappe 21 verschlossen, so dass das Lagergehäuse 3 zumindest annährend flüssigkeitsdicht bzw. öldicht und staubdicht ausgeführt ist. Somit kann Lagergehäuse 3 der Lagereinheit 1 mit einer Ölbadschmierung versehen sein und das Pendelrollenlager 6 ist sicher vordem Eintreten von Spritzwasser geschützt.

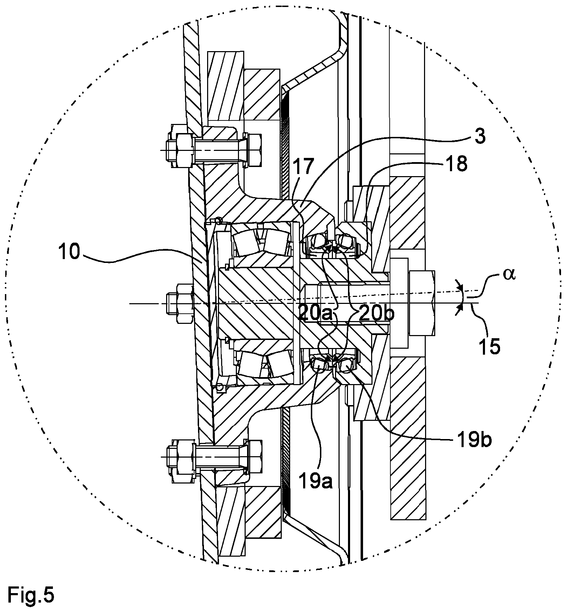

Da mitunter die Ronde 10 nicht immer nahezu orthogonal zur Drehachse 15 in die Bodenwalze 7 eingeschweißt ist, wie in Fig.5 gezeigt, entsteht ein Winkelversatz **α** zwischen der Längsachse des Lagergehäuses 3, welche sich senkrecht zu der schräg eingeschweißten Ronde 10 ausbildet, und der Längsachse des Lagerzapfens 2, welche in diesem Fall der Drehachse 15 entspricht. Das Pendelrollenlager 6 ist dazu eingerichtet, diesen Winkelversatz **α** auszugleichen, indem der Lagerinnenring sich gegenüber dem Lageraußenring verkippt und so die Achsen wieder zusammenführt. Da die Dichtungsanordnung 16 teilweise an dem Lagergehäuse 3 und teilweise an dem Lagerzapfen 2 angeordnet ist, ist es, um den Schutz der Lageranordnung auch bei vorhandenem **Winkelversatz α** aufrecht zu erhalten, notwendig, dass die Dichtungsanordnung 16 dem **Winkelversatz α** folgt: Die Elastizität des ersten und zweiten Stützringes 19a, 19b sorgt dafür, dass der Gleitring 17 mit dem Laufring 18 an den Laufflächen 20a, 20b in Anlage gehalten werden während der Übergang zwischen Gleitring 17 und Lagergehäuse 3 ebenso wie zwischen Laufring 18 und Lagerzapfen 2 gleichermaßen abgedichtet sind. Hierzu werden der erste und zweite Stützring 19a, 19b bei Montage komprimiert, so dass sie sich bei auftretendem **Winkelversatz α** einerseits ausdehnen können und andererseits weiter komprimiert werden, um dem selbigen zu folgen.

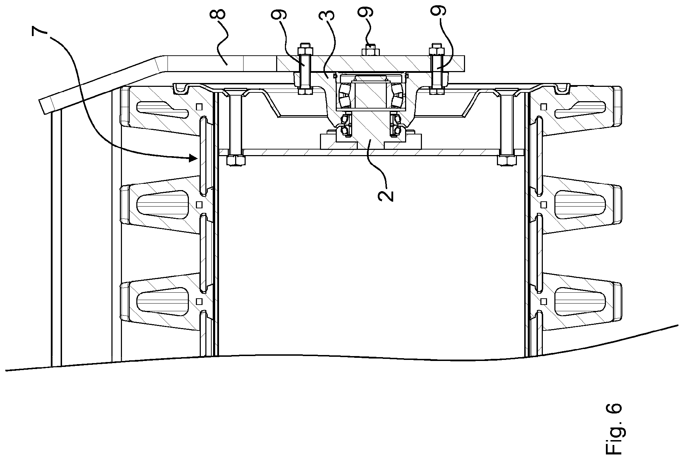

Ein weiteres Ausführungsbeispiel einer erfindungsgemäßen Lageranordnung ist in Fig.6 zu sehen. Der Aufbau entspricht im Wesentlichen dem Aufbau des ersten Ausführungsbeispiels in den Fig.1-5. Der Unterschied liegt in der umgekehrten Formation der Lageranordnung. Hierbei ist der Lagerzapfen 2 mittels eines stoffschlüssigen Fügeverfahrens an der Bodenwalze 7 befestigt. Im vorliegenden Beispiel ist der Lagerzapfen 2 an der Ronde 10 angeschweißt. Ebenso denkbar ist, dass der Lagerzapfen 2 an der Ronde 10 unter Vermittlung von Klebstoff angeklebt ist. Das Lagergehäuse 3 ist mittels durch die Bohrungen 4 hindurchgeführter Schrauben 9 an dem Traggerüst8 angeordnet. Insofern ist die Anordnung des Lagerzapfens 2 und des Lagergehäuses 3 gegenüber dem in den Fig.1-5 gezeigten Ausführungsbeispiel vertauscht.

### Bezugszeichenliste

- 1: Lagereinheit
- 2: Lagerzapfen
- 3: Lagergehäuse
- 4: Bohrung
- 5: Innengewinde
- 6: Pendelrollenlager
- 7: Bodenwalze
- 8: Traggerüst
- 9, 9`: Schraube
- 10: Ronde
- 11: Mittenzentrierung
- 12: Unterlegscheibe
- 13: Flansch
- 14: Lagerachse
- 15: Drehachse
- 16: Dichtungsanordnung
- 17: Gleitring
- 18: Laufring
- 19a: erster Stützring
- 19b: zweiter Stützring
- 20a, 20b: Lauffläche
- 21: Lagerkappe
- 22: Dichtlippe
- **α**: Winkelversatz

## Patentansprüche

1. Lageranordnung zur drehbaren Verbindung eines vorzugsweise als Bodenwalze (7) ausgebildeten Drehelements (7) mit einem dem Drehelement (7) zugeordneten Traggerüst (8) über zumindest einen Lagerzapfen (2) und über zumindest eine ein Lagergehäuse (3) umfassende Lagereinheit (1), wobei die Lagereinheit (1) mittels des Lagergehäuses (3) an dem Drehelement (7) oder an dem Traggerüst (8) angeordnet ist und der Lagerzapfen (2) entsprechend an dem Traggerüst (8) oder an dem Drehelement (7) angeordnet ist, und die Lagereinheit (1) zum Ausgleich eines Winkelversatzes (α) zwischen den Längsachsen des Lagergehäuses (3) und des Lagerzapfens (2) eingerichtet ist, wobei die Lagereinheit (1) eine Dichtungsanordnung (16) umfasst, dass die Dichtungsanordnung (16) dazu eingerichtet ist, einen umlaufenden Spalt zwischen Lagerzapfen (2) und Lagergehäuse (3), vorzugsweise zumindest annährend flüssigkeitsdicht und/oder staubdicht, abzudichten, **dadurch gekennzeichnet, dass** das Lagergehäuse (3) mittels der den umlaufenden Spalt zwischen Lagerzapfen (2) und Lagergehäuse (3) abdichtenden, mit dem Lagerzapfen (2) zusammenwirkenden Dichtungsanordnung (16) einerseits und einer lösbaren Lagerkappe (21) mit einer umlaufenden Dichtlippe (22) andererseits zumindest annährend öldicht und/oder staubdicht ausgeführt ist, dass die Dichtungsanordnung (16) zumindest einen Gleitring (17), zumindest einen Laufring (18) und zumindest einen ersten und einen zweiten Stützring (19a, 19b) umfasst, dass der Gleitring (17) und der Laufring (18) aus einem, vorzugsweise identischen und hochlegierten, Metallwerkstoff geformt sind, dass der Gleitring (17) und der Laufring (18), vorzugsweise an den zueinander weisenden Flächen (20a, 20b), jeweils zumindest eine geläppte, und vorzugsweise polierte, Lauffläche (20a, 20b) aufweisen.

2. Lageranordnung nach Anspruch 1, **dadurch gekennzeichnet, dass** die Lagereinheit (1) in seinem Lagergehäuse (3) ein Wälzlager (6) zur drehbaren Verbindung zwischen Bodenwalze (7) und Traggerüst (8) über den Lagerzapfen (2) umfasst, dass das Wälzlager (6) als Pendellager (6) mit vorzugsweise tonnenförmigen oder kugelförmigen Wälzkörpern ausgeführt ist, dass die Lagereinheit (1) mittels des Pendellagers (6) dazu eingerichtet ist, den Winkelversatz (α) auszugleichen.

3. Lageranordnung nach zumindest einem der vorstehenden Ansprüche, **dadurch gekennzeichnet, dass** der Gleitring (17) den Lagerzapfen (2) umgreifend, nicht drehbar an dem Lagergehäuse (3) angeordnet ist, dass der Laufring (18) den Lagerzapfen (2) zumindest annährend flüssigkeitsdicht umschließend, nicht drehbar an dem Lagerzapfen (2) angeordnet ist, dass der Gleitring (17) mittels des ersten Stützringes (19a) mit dem Laufring (18) mittels des zweiten Stützringes (19b) an zueinander weisenden Flächen (20a, 20b) verspannt ist.

4. Lageranordnung nach zumindest einem der vorstehenden Ansprüche, **dadurch gekennzeichnet, dass** der zumindest eine erste Stützring (19a) und der zumindest eine zweite Stützring (19b) aus einem elastischen Werkstoff, vorzugsweise aus einem Elastomer, geformt sind, dass die Dichtungsanordnung (16) mittels des ersten und zweiten Stützringes (19a, 19b) dazu eingerichtet ist, einem Winkelversatz (α) zwischen den Längsachsen des Lagergehäuses (3) und des Lagerzapfens (2) zu folgen.

5. Landwirtschaftliche Maschine mit einer Bodenwalze (7) und einem der Bodenwalze (7) zugeordnetem Traggerüst (8), wobei die Bodenwalze (7) über zumindest einen Lagerzapfen (2) und über zumindest eine ein Lagergehäuse (3) umfassende Lagereinheit (1) mit dem Traggerüst (8) drehbar verbunden ist, wobei die Lagereinheit (1) mittels des Lagergehäuses (3) an der Bodenwalze (7) oder an dem Traggerüst (8) angeordnet ist und der Lagerzapfen (2) entsprechend an dem Traggerüst (8) oder an der Bodenwalze (7) angeordnet ist, **dadurch gekennzeichnet, dass** die Lagereinheit (1) bestehend aus einer Lageranordnung nach zumindest einem der Ansprüche 1 bis 4 ausgeführt ist

6. Landwirtschaftliche Maschine nach Anspruch 5, **dadurch gekennzeichnet, dass** das Lagergehäuse (3) mit einer Ölbadschmierung, vorzugsweise als Lebensdauerschmierung, versehen ist.

7. Landwirtschaftliche Maschine nach zumindest einem der vorstehenden Ansprüche, **dadurch gekennzeichnet, dass** der Lagerzapfen (2) und/oder das Lagergehäuse (3) mittels lösbarer Befestigungsmittel (9, 9') an dem Traggerüst (8) oder an der Bodenwalze (7) angeordnet ist.

8. Landwirtschaftliche Maschine nach Anspruch 7, **dadurch gekennzeichnet, dass** die lösbaren Befestigungsmittel (9, 9') als Schrauben (9, 9') und/oder einschraubbare Mittenzentrierung (11) ausgeführt sind.

## Claims

1. Bearing assembly for the rotatable connection of a rotary element (7), preferably designed as a soil roller (7), to a support frame (8) associated with the rotary element (7), via at least one bearing journal (2) and via at least one bearing unit (1) comprising a bearing housing (3), the bearing unit (1) being arranged on the rotary element (7) or on the support frame (8) by means of the bearing housing (3) and the bearing journal (2) being accordingly arranged on the support frame (8) or on the rotary element (7), and the bearing unit (1) being designed to compensate for an angular offset (α) between the longitudinal axes of the bearing housing (3) and the bearing journal (2), the bearing unit (1) comprising a sealing arrangement (16), that the sealing arrangement (16) is designed to preferably at least approximately liquid-tightly and/or dust-tightly seal off a circumferential gap between bearing journal (2) and bearing housing (3), **characterized in that** the bearing housing (3) is designed to be at least approximately oil-tight and/or dust-tight by means of both the sealing arrangement (16), which seals the circumferential gap between the bearing journal (2) and bearing housing (3) and interacts with the bearing journal (2), and a detachable bearing cap (21), which has a circumferential sealing lip (22), **in that** the sealing arrangement (16) comprises at least one rotating face (17), at least one bearing race (18) and at least one first and one second bearing ring (19a, 19b), **in that** the rotating face (17) and the bearing race (18) are formed from a preferably identical and highly alloyed metal material, **in that** the rotating face (17) and the bearing race (18) each have at least one lapped, preferably polished, raceway (20a, 20b), preferably on the surfaces (20a, 20b) which face one another.

2. Bearing assembly of claim 1, **characterized in that** the bearing unit (1) comprises in its bearing housing (3) a roller bearing (6) for rotatable connection between the soil roller (7) and the support frame (8) via the bearing journal (2), **in that** the roller bearing (6) is designed as a self-aligning bearing (6) having preferably barrel-shaped or spherical rolling elements, **in that** the bearing unit (1) is designed to compensate for the angular offset (α) by means of the self-aligning bearing (6).

3. Bearing assembly according to at least one of the preceding claims, **characterized in that** the rotating face (17) is non-rotatably arranged on the bearing housing (3) so as to engage around the bearing journal (2), **in that** the bearing race (18) is non-rotatably arranged on the bearing journal (2) so as to at least approximately liquid-tightly surround the bearing journal (2), **in that** the rotating face (17) is braced by means of the first bearing ring (19a), together with the bearing race (18) by means of the second bearing ring (19b), on surfaces (20a, 20b) facing one another.

4. Bearing assembly according to at least one of the preceding claims, **characterized in that** the at least one first bearing ring (19a) and the at least one second bearing ring (19b) are formed from a resilient material, preferably from an elastomer, **in that** the sealing arrangement (16) is designed to follow an angular offset (α) between the longitudinal axes of the bearing housing (3) and the bearing journal (2) by means of the first and second bearing rings (19a, 19b).

5. Agricultural machine comprising a soil roller (7) and a support frame (8) associated with the soil roller (7), the soil roller (7) being rotatably connected to the support frame (8) via at least one bearing journal (2) and via at least one bearing unit (1) comprising a bearing housing (3), the bearing unit (1) being arranged on the soil roller (7) or on the support frame (8) by means of the bearing housing (3) and the bearing journal (2) being accordingly arranged on the support frame (8) or on the soil roller (7), **characterized in that** the bearing unit (1) consisting of a bearing assembly is designed according to at least one of claims 1 to 4.

6. Agricultural machine according to claim 5, **characterized in that** the bearing housing (3) is provided with oil bath lubrication, preferably in the form of lifetime lubrication.

7. Agricultural machine according to at least one of the preceding claims, **characterized in that** the bearing journal (2) and/or the bearing housing (3) is arranged on the support frame (8) or on the soil roller (7) by means of releasable fastening means (9, 9').

8. Agricultural machine according to claim 7, **characterized in that** the releasable fastening means (9, 9') are designed as screws (9, 9') and/or screw-in centering means (11).

## Revendications

1. Agencement de palier destiné à relier de manière rotative un élément rotatif (7), de préférence conçu en tant que cylindre de sol (7), à une structure support (8) associée à l'élément rotatif (7) par l'intermédiaire d'au moins un pivot de palier (2) et par l'intermédiaire d'au moins une unité de palier (1) comprenant un logement de palier (3), l'unité de palier (1) étant agencée au moyen du logement de palier (3) au niveau de l'élément rotatif (7) ou de la structure support (8) et le pivot de palier (2) étant agencé de manière correspondante au niveau de la structure support (8) ou de l'élément rotatif (7), et l'unité de palier (1) étant conçue pour compenser un décalage angulaire (α) entre les axes longitudinaux du logement de palier (3) et du pivot de palier (2), l'unité de palier (1) comprenant un agencement d'étanchéité (16), en ce que l'agencement d'étanchéité (16) est conçu pour fermer une fente périphérique entre le pivot de palier (2) et le logement de palier (3), de préférence de manière au moins quasiment étanche aux liquides et/ou aux poussières, **caractérisé en ce que** le logement de palier (3) est réalisé au moins de manière quasiment étanche à l'huile et/ou aux poussières au moyen de l'agencement d'étanchéité (16) fermant la fente périphérique entre le pivot de palier (2) et le logement de palier (3), interagissant avec le pivot de palier (2), d'une part et un couvercle de palier (21) amovible comportant une lèvre d'étanchéité (22) périphérique d'autre part, **en ce que** l'agencement d'étanchéité (16) comprend au moins une bague de glissement (17), au moins une bague de roulement (18) et au moins une première et une deuxième bague d'appui (19a, 19b), **en ce que** la bague de glissement (17) et la bague de roulement (18) sont formées à partir d'un matériau métallique, de préférence identique et hautement allié, **en ce que** la bague de glissement (17) et la bague de roulement (18) présentent, de préférence au niveau des surfaces (20a, 20b) orientées l'une vers l'autre, respectivement au moins une surface de roulement (20a, 20b) rodée et de préférence polie.

2. Agencement de palier selon la revendication 1, **caractérisé en ce que** l'unité de palier (1) comprend, dans son logement de palier (3), un palier à rouleaux (6) pour la liaison rotative entre le cylindre de sol (7) et la structure support (8) par l'intermédiaire du pivot de palier (2), **en ce que** le palier à rouleaux (6) est réalisé en tant que roulement à rotule (6) comportant des corps de roulement de préférence en forme de tonneau ou en forme de bille, **en ce que** l'unité de palier (1) est conçue pour compenser le décalage angulaire (α) au moyen du roulement à rotule (6).

3. Agencement de palier selon au moins l'une des revendications précédentes, **caractérisé en ce que** la bague de glissement (17) est agencée, en enserrant le pivot de palier (2), de manière non rotative au niveau du logement de palier (3), **en ce que** la bague de roulement (18) est agencée, en entourant de manière au moins quasiment étanche aux liquides le pivot de palier (2), de manière non rotative au niveau du pivot de palier (2), **en ce que** la bague de glissement (17) est calée au moyen de la première bague d'appui (19a) avec la bague de roulement (18) au moyen de la deuxième bague d'appui (19b) au niveau de surfaces (20a, 20b) orientées l'une vers l'autre.

4. Agencement de palier selon au moins l'une des revendications précédentes, **caractérisé en ce que** l'au moins une première bague d'appui (19a) et l'au moins une deuxième bague d'appui (19b) sont formées à partir d'un matériau élastique, de préférence un élastomère, **en ce que** l'agencement d'étanchéité (16) est conçu pour suivre, au moyen de la première et de la deuxième bague d'appui (19a, 19b), un décalage angulaire (α) entre les axes longitudinaux du logement de palier (3) et du pivot de palier (2).

5. Machine agricole comportant un cylindre de sol (7) et une structure support (8) associée au cylindre de sol (7), le cylindre de sol (7) étant relié de manière rotative à la structure support (8) par l'intermédiaire d'au moins un pivot de palier (2) et d'au moins une unité de palier (1) comprenant un logement de palier (3), l'unité de palier (1) étant agencée au moyen du logement de palier (3) au niveau du cylindre de sol (7) ou de la structure support (8) et le pivot de palier (2) étant agencé de manière correspondante au niveau de la structure support (8) ou du cylindre de sol (7), **caractérisée en ce que** l'unité de palier (1), constituée par un agencement de palier, est réalisée selon au moins l'une des revendications 1 à 4.

6. Machine agricole selon la revendication 5, **caractérisée en ce que** le logement de palier (3) est pourvu d'une lubrification par bain d'huile, de préférence en tant que lubrification à durée de vie.

7. Machine agricole selon au moins l'une des revendications précédentes, **caractérisée en ce que** le pivot de palier (2) et/ou le logement de palier (3) est/sont agencé(s) au moyen de moyens de fixation (9, 9') amovibles au niveau de la structure support (8) ou du cylindre de sol (7).

8. Machine agricole selon la revendication 7, **caractérisée en ce que** les moyens de fixation (9, 9') amovibles sont réalisés en tant que vis (9, 9') et/ou en tant que système de centrage (11) pouvant être vissé.
